# EUROPÄISCHE PATENTSCHRIFT

(11) **EP 2 921 429 B1**
(45) Veröffentlichungstag und Bekanntmachung des Hinweises auf die Patenterteilung: **13.09.2017**
(21) Anmeldenummer: 15157078.5
(22) Anmeldetag: 02.03.2015
(51) Int. Cl.: B65G 9/00

(54) **Einrichtung und Verfahren zum Bremsen von Förderwagen einer Fördervorrichtung**
Device and method for braking transport vehicles of a transport device
Dispositif et procédé de freinage de chariot roulant d'un dispositif de transport

(30) Priorität: 18.03.2014 CH 4132014
(43) Veröffentlichungstag der Anmeldung: 23.09.2015
(73) Patentinhaber: Ferag AG, 8340 Hinwil (CH)
(72) Erfinder: Brunschwiler, Othmar, 9553 Bettwiesen (CH)
(74) Vertreter: Frei Patent Attorneys

(56) Entgegenhaltungen:
- EP-B1- 1 470 065
- DE-A1- 3 929 301
- FR-A- 607 415

## Beschreibung

Die Erfindung bezieht sich auf das Gebiet der Fördertechnik und betrifft eine Bremseinrichtung zum Bremsen eines sich entlang einer Bewegungsbahn bewegenden Förderwagens. Ferner betrifft die Erfindung eine Fördervorrichtung mit einer Bremseinrichtung sowie ein Verfahren zum Bremsen eines Förderwagens. Die Bremseinrichtung enthält ein Bremsorgan zur Herstellung eines Bremskontaktes mit dem Förderwagen.

Fördereinrichtungen mit schienengeführten Förderwagen, welche über Laufrollen oder Gleitelementen entlang von Führungsschienen unabhängig voneinander geführt werden, sind aus dem Stand der Technik bekannt. Derartige Fördereinrichtungen werden z. B. als Schwerkraftförderer ausgestaltet. Bei diesen Einrichtungen werden die Förderwagen über Mitnehmer auf ein höheres Potentialniveau bewegt, von wo aus sich diese mittels Schwerkraft entlang der Führungsschiene in Richtung eines tieferen Potentialniveaus bewegen. Der Begriff "Potentialniveau" bezieht sich auf die potentielle Energie der Förderwagen im Gravitationsfeld.

Bei der Förderung von einem tieferen auf ein höheres Potentialniveau weist die Förderbahn bzw. die Führungsschiene entsprechend eine Steigung auf. Bei der Förderung von einem höheren auf ein tieferes Potentialniveau weist die Förderbahn bzw. die Führungsschiene entsprechend ein Gefälle auf.

An die Förderwagen sind jeweils Halteorgane gekoppelt, welche die zu fördernden Stückgüter aufnehmen und halten. Die Stückgüter werden so mittels den Förderwagen entlang einer durch die Führungsschiene vorgegebene Förderstrecke gefördert.

Die genannten Fördereinrichtungen weisen den Vorteil auf, dass die Förderwagen einzeln, d.h. unabhängig voneinander entlang einer Förderstrecke bewegt werden können. Dies erlaubt zum Beispiel die Förderung von Stückgütern entlang verschiedener Förderwege oder eine Pufferung von mit Stückgütern besetzten Förderwagen entlang einer Förderstrecke.

Die Patentpublikation EP-B-0 856 480 beschreibt eine Fördereinrichtung mit einer Mehrzahl von schienengeführten Förderwagen. Die Förderwagen umfassen Laufrollen, mit welchen die Förderwagen entlang einer Führungsschiene abrollen.

Die Patentpublikation EP-B-1 169 249 beschreibt ein Verfahren und eine Vorrichtung zur Stückgutförderung. Die Stückgüter werden auf Haltemittel geladen, von diesen gehalten gefördert und von diesen wieder entladen.

Entlang der Förderstrecke einer Fördervorrichtung werden oftmals Arbeitsschritte durchgeführt, welche eine, insbesondere auch bezüglich der Geschwindigkeit, kontrollierte Bewegung der Förderwagen erfordern.

Da die Förderwagen jedoch entlang eines Gefälles ungesteuert und mit individueller Geschwindigkeit bewegt werden, und überdies die Geschwindigkeit für eine nachfolgende Bearbeitungs- oder Eintakteinrichtung häufig zu gross ist, braucht es Mittel, um die Geschwindigkeit der Förderwagen vor einer Bearbeitungs- oder Eintakteinrichtung anzupassen.

So ist zum Beispiel zum Eintakten der Förderwagen mittels einer Eintaktvorrichtung eine kontrollierte Geschwindigkeit der Förderwagen notwendig. Die Eintaktvorrichtung soll die Förderwagen in gleichmässigen Abständen zueinander und mit einer gleichmässigen Geschwindigkeit entlang einer Förderstrecke bewegen. Dies erlaubt die Ausführung von taktgesteuerten Bearbeitungsschritten an den durch die Förderwagen geförderten Stückgütern.

Die Veröffentlichungsschrift EP 1 470 065 B1 beschreibt ein integriertes Fördersystem zur Beförderung von Wagen entlang einer Fertigungsstrasse. Das Fördersystem enthält unter anderem eine Bremseinheit mit einem nichtangetriebenen, leerlaufenden, gespannten Riemen. FR 607415 offenbart weiter eine Bremseinrichtung gemäß dem Oberbegriff des Anspruchs 1. Es ist daher eine Aufgabe der vorliegenden Erfindung, eine Bremseinrichtung zum Bremsen eines entlang einer Bewegungsbahn bewegten Förderwagens vorzuschlagen. Die Bremseinrichtung soll den Förderwagen möglichst schonend und sanft bremsen.

Gemäss einer weiteren Aufgabe soll die Bremseinrichtung den Förderwagen entlang einer Bewegungsrichtung in einem Bremsabschnitt bremsen und den Förderwagen mit einer definierten Geschwindigkeit wieder aus dem Bremsabschnitt hinaus bewegen. Die Geschwindigkeit des Förderwagens beim Verlassen des Bremsabschnittes soll überdies mit möglichst geringem steuerungstechnischen Aufwand über einen Antrieb veränderbar sein.

Es ist ferner eine weitere Aufgabe der vorliegenden Erfindung, eine Bremseinrichtung mit einem möglichst einfachen Aufbau vorzuschlagen.

Ferner soll gemäss einer weiteren Aufgabe die Bremswirkung mittels einfacher Mittel einstellbar und an das Laufverhalten der Förderwagen anpassbar sein. Wenigstens eine der Aufgaben wird durch die Merkmale der unabhängigen Ansprüche 1, 10 und 12 gelöst.

Umlaufend geführt bedeutet insbesondere, dass der Bremskörper entlang einer geschlossene Bewegungsbahn bewegt und durch das mindestens eine Umlenkorgan umgelenkt wird, ohne dass der Bremskörper mit dem Umlenkorgan jedoch fest verbunden ist.

Das oder die Umlenkorgane sind insbesondere drehbar gelagert.

Der Bremskörper ist insbesondere endlos ausgebildet. Der Bremskörper ist insbesondere ein Längskörper. Der Bremskörper ist insbesondere biegeschlaff.

Der Bremskörper ist eine Kette. Die Kette besteht insbesondere aus einer Mehrzahl von Kettengliedern, welche gelenkig miteinander verbunden sind. Die Kette besteht aus Metall, wie zum Beispiel Stahl.

Die Umlenkorgane können Zahnräder sein.

Das oder die Umlenkorgane können auch als Umlenkrollen ausgebildet sein.

Am Bremskörper können Bremselemente vorgesehen sein, über welche der Bremskontakt zum Förderwagen hergestellt wird. Die Bremselemente bilden eine Kontaktfläche zur Herstellung des Bremskontaktes aus.

Die Bremselemente können über eine Formschluss-, Kraftschluss- oder Stoffschlussverbindung oder einer Kombination davon am Bremskörper angebracht sein.

Die Bremselemente können über einen Verbindungsabschnitt klemmend zwischen zwei Schenkeln eines Kettengliedes der Bremskette gesteckt bzw. geklipst sein.

Die Bremselemente sind insbesondere Verschleissteile, welche z. B. austauschbar sind. Die Bremselemente bestehen beispielsweise aus einem Kunststoff.

Der Bremskontakt ist insbesondere ein mechanischer Reibkontakt, d.h. ein reibungsbehafteter Kontakt zwischen dem Förderwagen und dem Bremskörper. Der Bremskontakt kommt dadurch zustande, dass der Bremskörper einen Auflagedruck bzw. eine Auflagekraft auf den Förderwagen ausübt. Dieser Auflagedruck wird durch das Eigengewicht eines Teils des Bremskörpers ausgeübt.

Folglich wird der Bremseffekt unter anderem durch das Eigengewicht eines im Bremsabschnitt auf dem Förderwagen lastenden, bremsaktiven Kettenabschnitt des Bremskörpers erreicht.

Der bremsaktive Kettenabschnitt des Bremskörpers ist jener Kettenabschnitt, welcher in der Lage ist, mit dem Förderwagen einen Bremskontakt herzustellen, um diesen zu bremsen. Der bremsaktive Kettenabschnitt des Bremskörpers ist daher insbesondere der im Bremsabschnitt angeordnete Abschnitt des Bremskörpers.

Ebenfalls Gegenstand der vorliegenden Erfindung ist eine Fördervorrichtung, welche eine erfindungsgemässe Bremseinrichtung enthält. Die Fördervorrichtung enthält insbesondere wenigstens einen Förderwagen, welcher entlang einer Bewegungsbahn bewegt werden kann.

Der Förderwagen enthält insbesondere ein Kontaktelement zur Herstellung des Bremskontaktes mit dem Bremskörper. Das Kontaktelement bildet insbesondere eine Kontaktfläche zur Herstellung des Bremskontaktes aus.

Das Kontaktelement kann ein integraler Bestandteil des Förderwagens sein. Das Kontaktelement kann auch ein separates, am Förderwagen angebrachtes Bauteil sein.

Das Kontaktelement ist insbesondere ein in Bewegungsrichtung betrachtet seitlich vom Förderwagen abstehendes Element.

Das Kontaktelement kann insbesondere ein Kontaktstift, ein Kontaktnocken, ein Kontaktzapfen oder ein Kontaktdorn sein.

Der Bremskörper ist im Bremsabschnitt mit einem bremsaktiven Kettenabschnitt insbesondere über der Kontaktfläche des Kontaktelements eines sich durch den Bremsabschnitt bewegenden Förderwagens angeordnet.

Das Kontaktelement zur Herstellung des Bremskontaktes kann überdies noch weitere Funktionen ausüben. So kann das Kontaktelement auch zur Ausbildung eines Mitnahmekontaktes durch den Mitnehmer einer Mitnahmeeinrichtung dienen.

Der Förderwagen enthält im Weiteren Halteorgane, wie Klammern oder Haken, zum Halten von Stückgütern.

Die Stückgüter können zum Beispiel Einzelgüter wie Vorformlinge, Kartuschen, Gläser, Flaschen, Büchsen, Lebensmittel, wie Würste, Kartonverpackungen, wie Kekskartons, Stangenware, wie Bonbons, Tuben oder Zigarren sein.

Die Stückgüter können jeweils auch eine Mehrzahl von Einzelgütern sein, welche zum Beispiel in einem gemeinsamen Gebinde, wie Tasche, zusammengefasst sind, insbesondere zu einer Kollektion zusammengefasst sind.

Die Förderwagen werden insbesondere unabhängig voneinander entlang der Bewegungsbahn bewegt. Die Förderwagen sind insbesondere nicht miteinander verkettbar ausgebildet.

Die Bremseinrichtung bildet, wie bereits erwähnt, insbesondere einen Bremsabschnitt aus. Der Bremsabschnitt führt insbesondere entlang eines Abschnittes der Bewegungsbahn der Förderwagen. Der flexible Bremskörper wird mit einem bremsaktiven Kettenabschnitt durch den Bremsabschnitt geführt.

Die Bewegungsbahn der Förderwagen wird insbesondere durch eine Führungsschiene festgelegt, entlang welcher die Förderwagen bewegbar sind. Die Förderwagen sind insbesondere durch die Führungsschiene geführt.

Die Führungsschiene führt insbesondere durch den Bremsabschnitt der Bremseinrichtung.

Die Führungsschiene kann ein Rundprofil oder Mehrkantprofil, wie Sechskantprofil sein.

Die Führungsschiene kann aus Metall, wie Stahl oder Aluminium, oder aus Kunststoff sein.

Die Führungsschiene ist insbesondere über Halterungsmittel mit einer an dieser Stelle nicht näher erläuterten Tragstruktur verbunden.

Die Führungsschiene bildet insbesondere an ihrem Aussenumfang Laufflächen bzw. Gleitflächen für den Förderwagen aus.

Die Förderwagen können gleitend oder rollend entlang der Förderschiene bewegbar sein.

Die Förderwagen enthalten insbesondere Laufrollen zum Abrollen entlang der Führungsschiene.

Die Förderwagen können auch Gleitelemente zum Gleiten entlang der Führungsschiene enthalten.

Die Förderwagen werden insbesondere entlang eines Förderschienenabschnittes durch den Bremsabschnitt der Bremseinrichtung bewegt.

Der bremsaktive Kettenabschnitt des Bremskörpers verläuft im Bremsabschnitt in Bewegungsrichtung betrachtet insbesondere seitlich von der Führungsschiene für die Förderwagen.

Gemäss einer Weiterbildung der Erfindung enthält die Bremseinrichtung in Bewegungsrichtung betrachtet zwei nebeneinander angeordnete flexible Bremskörper. Die Bremskörper sind insbesondere gemäss der oben beschriebenen Art ausgebildet. Die beiden Bremskörper sind insbesondere parallel angeordnet.

Die beiden Bremskörper können in Bewegungsrichtung betrachtet im Bremsabschnitt, insbesondere mit ihren bremsaktiven Kettenabschnitten, seitlich von einer Führungsschiene für die Förderwagen angeordnet sein. Die Führungsschiene führt dabei im Bremsabschnitt zwischen den beiden Bremskörpern durch.

Die beiden Bremskörper sind insbesondere identisch ausgebildet. Die Anordnung von Bremskörper und Umlenkorgan bzw. Umlenkorganen ist insbesondere identisch ausgebildet. Die beiden Anordnungen sind insbesondere zueinander spiegelsymmetrisch.

Die beiden Bremskörper können jeweils um gemeinsame Umlenkorgane oder um separate Umlenkorgane geführt sein.

Gemäss einer Weiterbildung der Erfindung enthält die Bremseinrichtung Antriebsmittel zum Antreiben des Bremskörpers bzw. der Bremskörper. Der oder die Bremskörper werden insbesondere um die Umlenkorgane umlaufend angetrieben.

Das Antriebsmittel kann ein Antriebsmotor umfassen. Das Antriebsmittel kann ferner ein Übersetzungsgetriebe umfassen.

So können die Antriebsmittel das wenigstens eine Umlenkorgan antreiben, wobei das Umlenkorgan wiederum den Bremskörper antreibt.

Der Bremskörper kann um ein einzelnes Umlenkorgan umlaufend geführt sein.

Der Bremskörper ist insbesondere um wenigstens zwei voneinander beabstandete Umlenkorgane geführt. Gemäss dieser Weiterbildung weist der Bremskörper zwischen den beiden Umlenkorganen einen oberen Kettenabschnitt und einen unteren Kettenabschnitt auf. Der untere Kettenabschnitt wird durch den Bremsabschnitt geführt. Der untere Kettenabschnitt ist insbesondere ein bremsaktiver Kettenabschnitt.

Der flexible Bremskörper kann im Bremsabschnitt, wenn sich keine Förderwagen im Bremsabschnitt aufhalten, durchhängend ausgebildet sein. Dies kann insbesondere zutreffen, wenn der Bremskörper um zwei voneinander beabstandete Umlenkorgane geführt ist. Gemäss dieser Weiterbildung kann insbesondere der untere bremsaktive Kettenabschnitt zwischen den wenigsten beiden Umlenkorganen durchhängend ausgebildet sein.

Durchhängend bedeutet insbesondere, dass der bremsaktive Kettenabschnitt im Bremsabschnitt, wenn sich keine Förderwagen im Bremsabschnitt aufhalten, in Schwerkraftrichtung frei hängend ist und durch das Eigengewicht nach unten gezogen wird.

Durchhängend bedeutet insbesondere auch, dass der bremsaktive Kettenabschnitt in einem Mittelbereich tiefer liegt als in einem Anfangs- und Endbereich des Kettenabschnittes.

Der bremsaktive Kettenabschnitt kann im Bremsabschnitt insbesondere bis auf Höhe oder unterhalb der Führungsschiene frei durchhängen.

Der bremsaktive Kettenabschnitt kann im Bremsabschnitt insbesondere bis unterhalb der Kontaktfläche des Kontaktelementes eines durch den Bremsabschnitt bewegten Förderwagens frei durchhängen.

Gemäss einer Ausführungsvariante der Erfindung enthält die Bremseinrichtung eine im Bremsabschnitt auf den bremsaktiven Kettenabschnitt einwirkende Belastungseinrichtung. Die Belastungseinrichtung kann ein Belastungselement, wie Belastungsrolle oder Belastungszahnrad, enthalten, welches auf den bremsaktiven Kettenabschnitt eine, insbesondere in Schwerkraftrichtung wirkende, Belastungskraft ausübt. Das Belastungselement ist insbesondere nachgiebig gelagert. Das Belastungselement ist insbesondere federbelastet.

Diese Belastungskraft wirkt der durch den Förderwagen bzw. durch das Kontaktelement des Förderwagens im Bremsabschnitt auf den bremsaktiven Kettenabschnitt ausgeübten Hebekraft entgegen und sorgt so für eine gesteigerte Bremswirkung.

Gemäss einer Weiterbildung der Erfindung kann die Bremseinrichtung einen Auslenkmechanismus zum Einstellen der Durchhängung des Bremskörpers enthalten.

So kann über den Auslenkmechanismus der Bremskörperweg ausserhalb des Bremsabschnittes vergrössert oder verringert werden, wodurch als Kompensation das Mass des Durchhängens des bremsaktiven Kettenabschnittes im Bremsabschnitt verringert oder vergrössert wird. Eine Verringerung der Durchhängung bedeutet nämlich eine Verringerung des Kettenweges im Bremsabschnitt. Eine Vergrösserung der Durchhängung bedeutet eine Vergrösserung des Kettenweges im Bremsabschnitt. Je kleiner der Bremskörperweg im Bremskörper durch den Auslenkmechanismus ausserhalb des Bremsabschnitts eingestellt wird, desto stärker hängt der bremsaktive Kettenabschnitt im Bremsabschnitt durch. Je grösser dahingegen der Bremskörperweg im Bremskörper durch den Auslenkmechanismus ausserhalb des Bremsabschnitts eingestellt wird, desto weniger hängt der bremsaktive Kettenabschnitt im Bremsabschnitt durch, d.h. desto straffer ist der bremsaktive Kettenabschnitt im Bremsabschnitt geführt.

Die Bremseinrichtung kann hierzu einen an einem Belastungsarm angeordneten, drehbaren Auslenkkörper enthalten, welcher dem Bremskörper anliegt.

Durch Änderung der Position des Auslenkkörpers gegenüber dem Bremskörper kann der Bremskörper aus seiner Bewegungsbahn ausgelenkt werden. Je grösser nun die Auslenkung des Bremskörpers ausserhalb des Bremsabschnittes ist, desto grösser wird der Bremskörperweg ausserhalb des Bremsabschnittes.

Der Auslenkkörper kann eine Rolle oder ein Zahnrad sein. Der Belastungsarm kann ein federbelasteter Gelenkarm sein.

Der Auslenkmechanismus kann z. B. am oberen Kettenabschnitt angeordnet sein.

Wie im nachfolgenden Verfahren noch näher erläutert, kann über das Mass des Durchhängens des Bremskörpers und somit über das Mass der Auslenkung des Bremskörpers durch den Auslenkmechanismus die Bremswirkung verändert werden.

Die Erfindung betrifft auch ein Verfahren zum Bremsen eines sich entlang einer Bewegungsbahn bewegenden Förderwagens mittels einer erfindungsgemässen Bremseinrichtung.

Das Verfahren zeichnet sich dadurch aus, dass der Förderwagen in einem Bremsabschnitt der Bremseinrichtung auf den bremsaktiven Kettenabschnitt des Bremskörpers trifft und sich unter Ausbildung eines Bremskontaktes mit dem Bremskörper entlang des Bremsabschnittes bewegt.

Der Bremskörper wird zum Bremsabschnitt hin insbesondere von oben zur Bewegungsbahn, insbesondere zur Führungsschiene, des Förderwagens hin geführt.

Bei der Herstellung des Bremskontaktes mit dem Förderwagen im Bremsabschnitt wird der bremsaktive Kettenabschnitt im Bereich des Bremskontaktes insbesondere angehoben.

Bewegt sich der abzubremsende Förderwagen nun entlang des Bremskörpers durch den Bremsabschnitt, so wird der Bremskörper vor dem Förderwagen fortlaufend angehoben.

Nach Passieren des Förderwagens wird der Bremskörper hinter dem Förderwagen wieder abgesenkt.

Das Anheben und Absenken des Bremskörpers ergibt sich insbesondere dann, wenn der Bremskörper im Bremsabschnitt durchhängt.

Das Anheben und Absenken des bremsaktiven Kettenabschnitts wird also durch den sich in Bewegungsrichtung entlang des Bremsabschnittes bewegenden Förderwagen ausgelöst.

Bewegt sich nun der Bremskörper in den Bremsbereich hinein, so wird der im Bereich des Bremskontaktes angehobene Bremskörper, in Bewegungsrichtung betrachtet, hinter dem Förderwagen insbesondere gespannt. Je höher die Geschwindigkeit des Förderwagens relativ zum Bremskörper im Bremsabschnitt ist, desto stärker ist die Spannung des Bremskörpers hinter dem Förderwagen. Die genannte Spannung nimmt daher mit zunehmendem Abbremsen des Förderwagens entsprechend ab.

In Folge des Anspannens des Bremskörpers hinter dem Förderwagen wird der Bremskörper nach Passieren des Förderwagens nicht sogleich wieder abgesenkt. Je geringer die Geschwindigkeit des sich im Bremsabschnitt bewegenden Förderwagens ist, desto schneller erfolgt jedoch das Absenken des Bremskörpers hinter dem Förderwagen.

Das Anheben und Absenken des Bremskörpers kann zu einer wellenartigen Bewegung im bremsaktiven Kettenabschnitt in Bewegungsrichtung des Förderwagens führen. Dies trifft insbesondere dann zu wenn der Bremskörper hinter dem Förderwagen nicht allzusehr gespannt wird und die Absenkung des Bremskörpers hinter dem Förderwagen entsprechend schnell erfolgt.

Gemäss einer bereits erwähnten Weiterbildung der Erfindung wird der wenigstens eine Bremskörper durch ein Antriebsmittel angetrieben.

Der Bremskörper wird insbesondere mit einer definierten Geschwindigkeit angetrieben.

Der bremsaktive Kettenabschnitt des Bremskörpers bewegt sich im Bremsabschnitt in Bewegungsrichtung des durch den Bremsabschnitt bewegten Förderwagens.

Der Förderwagen wird im Bremsabschnitt insbesondere auf die Geschwindigkeit des bremsaktiven Kettenabschnittes abgebremst.

Der Bremskontakt zwischen dem Bremskörper und Förderwagen wird nach dem Abbremsen des Förderwagens auf die Geschwindigkeit des Bremskörpers insbesondere zu einem Antriebskontakt, über welchen der Förderwagen mit der Geschwindigkeit des bremsaktiven Kettenabschnittes angetrieben wird.

Der Förderwagen verlässt den Bremsabschnitt insbesondere mit der Geschwindigkeit des angetriebenen bremsaktiven Kettenabschnittes.

Die Bremseinrichtung dient gemäss dieser Weiterbildung der Erfindung sowohl dem Abbremsen der Förderwagen eingangs des Bremsabschnittes als auch dem Antrieb der Förderwagen in der Geschwindigkeit des Bremskörpers ausgangs des Bremsabschnittes.

Die Bremseinrichtung erfüllt also einerseits die Funktion, den Förderwagen abzubremsen und diesen andererseits mit einer definierten Geschwindigkeit aus der Bremseinrichtung zu entlassen.

Der Förderwagen bewegt sich zur Herstellung des Bremskontaktes mit dem Bremskörper im Bremsabschnitt mit der Kontaktfläche seines Kontaktelements insbesondere unter dem bremsaktiven Kettenabschnitt des Bremskörpers hindurch.

Der Förderwagen unterläuft bei Eintritt in den Bremsabschnitt mit seinem Kontaktelement insbesondere den bremsaktiven Kettenabschnitt.

Je stärker der Bremskörper im Bremsabschnitt durchhängt, desto stärker wird der Bremskörper im Bereich des Bremskontaktes durch den Förderwagen, insbesondere durch dessen Kontaktelement, angehoben.

Entsprechend weist auch die oben beschriebene Wellenbewegung eine höhere Amplitude auf. Dies führt zu einer vergleichsweise hohen Bremswirkung.

Andererseits gilt: je straffer der Bremskörper im Bremsabschnitt geführt ist, desto geringer wird der Bremskörper im Bereich des Bremskontaktes durch das Kontaktelement des Förderwagens angehoben.

Entsprechend weist auch die oben beschriebene Wellenbewegung eine kleinere Amplitude auf. Dies führt zu einer geringeren Bremswirkung.

Die Bremswirkung wird also einerseits durch die Reibung zwischen Förderwagen und Bremskörper und andererseits durch das Anheben des Bremskörpers im Bremsabschnitt erzielt.

Die vorliegende Bremseinrichtung erlaubt ein schonendes, sanftes jedoch trotzdem sehr effektives Abbremsen der Förderwagen. Dank der erfindungsgemässen Bremseinrichtung treten während des Bremsvorganges keine Schläge oder Stösse auf den Förderwagen auf. Dadurch wird die Funktionalität der nachfolgenden Prozesse gewährleistet.

Die Fördervorrichtung kann eine Steuerungseinrichtung zur Steuerung des Antriebsmittels der Bremseinrichtung und somit der Geschwindigkeit des Bremskörpers enthalten.

Die erfindungsgemässe Fördervorrichtung kann eine mit Schwerkraft betriebene Förderung beinhalten. Bei solchen Vorrichtungen werden die Förderwagen mit Schwerkraftunterstützung von einem höheren Potentialniveau entlang einer Bewegungsbahn mit Gefälle auf ein tieferes Potentialniveau bewegt.

Die Förderwagen werden insbesondere von der Schwerkraft angetrieben von einem höheren Potentialniveau zur Bremseinrichtung hin auf ein tieferes Potentialniveau bewegt.

Die Führungsschiene weist insbesondere ein Gefälle auf, entlang welchem sich der Förderwagen vom höheren zum tieferen Potentialniveau bewegt.

Der Begriff "Gefälle" bedeutet, dass die Bewegungsbahn eine Richtungskomponente und die entlang der Bewegungsbahn bewegten Förderwagen bzw. Mitnehmer eine Bewegungskomponente in Schwerkraftrichtung aufweisen.

In einer solchen Fördervorrichtung werden die Förderwagen über die Mitnehmer eines Mitnehmerantriebes von einem tieferen auf ein höheres Potentialniveau bewegt.

Die Führungsschiene weist in diesem Abschnitt eine Steigung auf. Steigung bedeutet, dass die Bewegungsbahn eine Richtungskomponente und die entlang der Bewegungsbahn bewegten Förderwagen eine Bewegungskomponente entgegen der Schwerkraftrichtung aufweisen.

Die erfindungsgemässe Fördervorrichtung kann als Hängeförderer ausgebildet sein. Bei einem Hängeförderer werden die Stückgüter wenigstens abschnittsweise hängend gefördert. Die Stückgüter werden durch die Förderwagen insbesondere im Bremsabschnitt der Bremseinrichtung hängend gefördert.

In der hängenden Förderung ist das Halteorgan mit dem Stückgut bezogen auf die Schwerkraftrichtung insbesondere unterhalb der Führungsschiene angeordnet.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
Figur 1: eine Seitenansicht einer erfindungsgemässen Bremseinrichtung;
Figur 2: eine Seitenansicht einer erfindungsgemässen Bremseinrichtung mit einer Belastungseinrichtung;
Figur 3: einen vergrösserten Ausschnitt der Figur 1 aus dem Bereich des unteren Kettenabschnittes;
Figur 4: eine Frontansicht der Bremseinrichtung gemäss Figur 1 bzw. 2;
Figur 5: eine perspektivische Ansicht eines schienengeführten Förderwagens.

Grundsätzlich sind in den Figuren gleiche Teile mit gleichen Bezugszeichen versehen. Das beschriebene Ausführungsbeispiel steht beispielhaft für den Erfindungsgegenstand und hat keine beschränkende Wirkung.

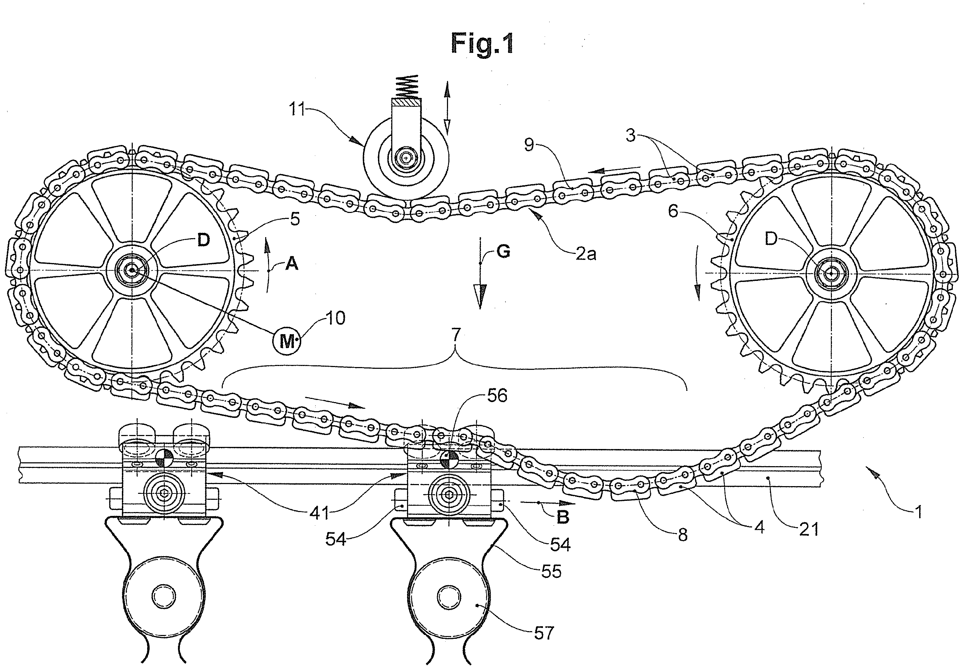

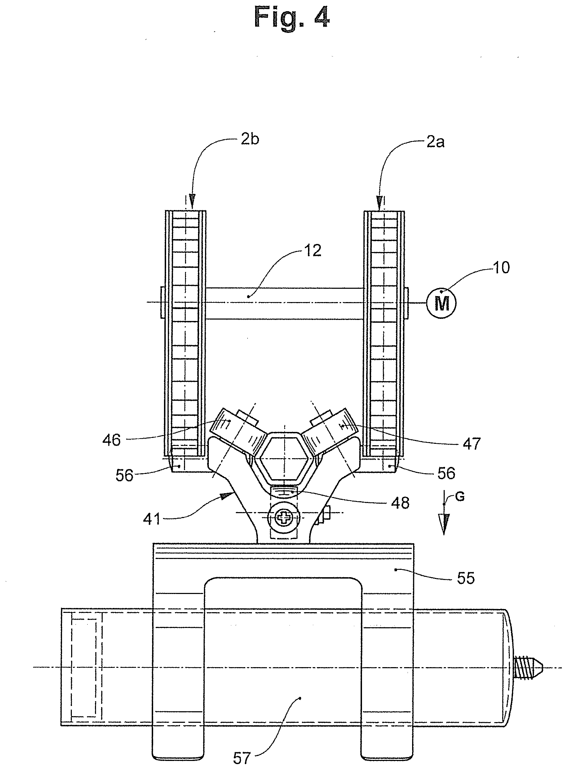

Die in den Figuren 1 bis 4 dargestellte Bremseinrichtung 1 enthält zwei in Bewegungsrichtung B betrachtet voneinander beabstandete Bremsketten 2a, 2b (siehe insbesondere Figur 4). Die Bremsketten 2a, 2b, welche parallel zueinander verlaufen, sind jeweils um zwei voneinander beabstandete, drehbar gelagerte Umlenkorgane 5, 6 umlaufend geführt. Die beiden Anordnungen von Bremskette 2a, 2b und Umlenkorgane 5, 6 sind spiegelsymmetrisch zueinander ausgebildet.

Die nebeneinander angeordneten Umlenkorgane 5, 6 der beide Bremsketten 2a, 2b sind jeweils über ein gemeinsame Drehachse 12 miteinander gekoppelt.

Die Umlenkorgane 5, 6 sind als Zahnräder ausgebildet, welche mit den Bremsketten 2a, 2b jeweils einen zahnenden Eingriff ausbilden.

Die Bremsketten 2a, 2b bestehen aus einer Mehrzahl von gelenkig miteinander verbundenen Kettengliedern 3.

An den Kettengliedern 3 der Bremsketten 2a, 2b sind Bremselemente 4 befestigt, welche mit ihren Kontaktflächen einen Bremskontakt mit Kontaktelementen 56 von in den Bremsabschnitt 7 hinein bewegten Förderwagen 41 ausbilden.

Die Bremsketten 2a, 2b bilden zwischen den beiden Umlenkorganen 5, 6 jeweils einen oberen Kettenabschnitt 9 und einen unteren, bremsaktiven Kettenabschnitt 8 aus.

Der untere Kettenabschnitt 8 ist gemäss der Ausführungsvariante gemäss Figur 1 in Schwerkraftrichtung G frei hängend angeordnet.

Die Bremseinrichtung 1 bildet im Bereich des unteren, bremsaktiven Kettenabschnitts 8 einen Bremsabschnitt 7 aus.

Mittels eines in der Ausführungsvariante nach Figur 1 dargestellten Auslenkmechanismus 11 lässt sich die Auslenkung der Bremskette 2a, 2b einstellen. Der Auslenkmechanismus 11 umfasst eine an einem Belastungsarm gehalterte Auslenkrolle, welche drehbar gelagert ist und dem oberen Kettenabschnitt 9 der Bremskette 2a, 2b anliegt. Je nach Position der Auslenkrolle wird die Bremskette 2a, 2b mehr oder weniger stark ausgelenkt. Je grösser die Auslenkung nun ist, desto grösser wird der Kettenweg. In Kompensation zum grösseren Kettenweg wird die Durchhängung im Bremsabschnitt verkürzt. Die Position der Auslenkrolle und somit der Kettenweg ist über den Belastungsarm einstellbar.

Je nach Position der Auslenkrolle und entsprechend je nach Grösse des Kettenweges hängt der untere Kettenabschnitt 8 im Bremsabschnitt 7 mehr oder weniger stark durch.

Die Führungsschiene 21 ist nun im Bremsabschnitt 7 zwischen den beiden frei hängenden, unteren Kettenabschnitten 8 der Bremsketten 2a, 2b hindurch geführt.

Über einen Antriebsmotor 10 wird eines der Umlenkorgane 5 in Drehrichtung A angetrieben. Das angetriebene Umlenkorgan 5 wiederum treibt die Bremsketten 2a, 2b an. Der untere, bremsaktive Kettenabschnitt 8 wird dabei in Bewegungsrichtung der in den Bremsabschnitt 7 eintreffenden Förderwagen 41 angetrieben.

Die einzelnen Förderwagen 41 werden entlang der Führungsschiene 21 voneinander unabhängig bewegt. Die Förderwagen 41 rollen dabei über Laufrollen entlang der Führungsschiene 21 ab. Die Förderwagen 41 enthalten jeweils ein Halteorgan 55 in Ausführung einer Halteklammer zur Aufnahme eines Stückgutes 57, wie z. B. einer Kartusche.

Im Weiteren enthalten die Förderwagen 41 jeweils zwei Kontaktstifte 56 zum Herstellen eines Bremskontaktes mit den Bremselementen 4 von jeweils einer Bremskette 2a, 2b. Die beiden Kontaktstifte 56 stehen in Bewegungsrichtung B betrachtet seitlich vom Förderwagen 41 ab, wobei zu jeder Seite hin jeweils ein Kontaktstift 56 absteht. Jedem Köntaktstift 56 ist eine Bremskette 2a, 2b der beschriebenen Art zugeordnet.

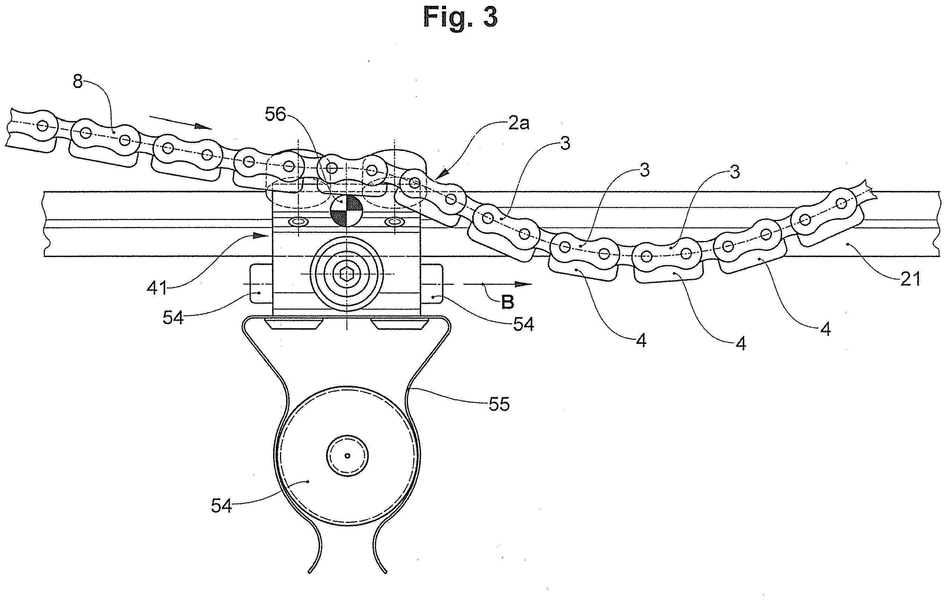

Weitere Details zum Förderwagen 41 können der nachfolgenden Beschreibung zu Figur 3 entnommen werden.

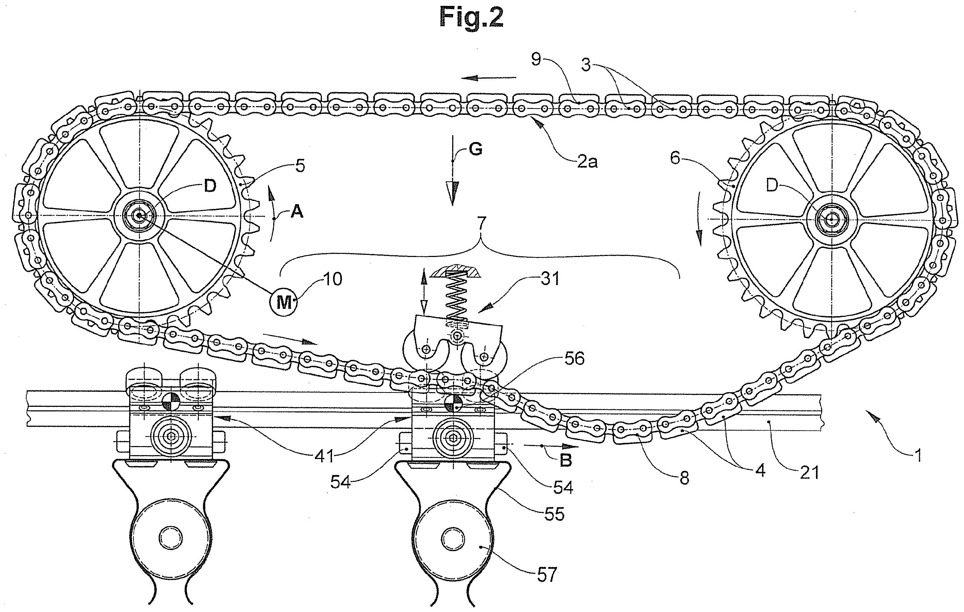

Gemäss der Ausführungsvariante nach Figur 2 enthält die Bremseinrichtung 1 eine im Bremsabschnitt 7 auf den unteren, bremsaktiven Kettenabschnitt 8 einwirkende Belastungseinrichtung 31. Die Belastungseinrichtung 31 enthält ein federbelastetes Belastungselement, wie Belastungsrolle, welches auf den unteren Kettenabschnitt 8 eine in Schwerkraftrichtung G wirkende Belastungskraft ausübt. Diese Belastungskraft wirkt der durch das Kontaktelement 56 des Förderwagens 41 im Bremsabschnitt 8 auf den unteren Kettenabschnitt 8 ausgeübten Hebekraft entgegen und sorgt so für eine gesteigerte Bremswirkung.

Ein entlang der Führungsschiene 21 mittels Schwerkraft in den Bremsabschnitt 7 der Bremseinrichtung 1 bewegter Förderwagen 41 kommt mit seinen beiden Kontaktstiften 56 jeweils in Bremskontakt mit den Bremselementen 4 des unteren Kettenabschnittes 8 der beiden Bremsketten 2a, 2b.

Die unteren Kettenabschnitte 8 der Bremsketten 2a, 2b hängen nun im Bremsabschnitt 7 bis unterhalb der Kontaktfläche des Kontaktstiftes 56 des in den Bremsabschnitt 7 hinein bewegten Förderwagens 41 durch.

Das Kontaktelement 56 des sich in den Bremsabschnitt 7 hinein bewegende Förderwagens 41 hebt daher den diesem zugeordneten unteren Kettenabschnitt 8 im Bereich des Bremskontaktes an.

Der untere Kettenabschnitt 8 senkt sich jeweils in Bewegungsrichtung betrachtet nach dem Passieren des Förderwagens 41 hinter dem Kontaktelement 56 wieder.

Aufgrund der dynamischen Vorwärtsbewegung des zu bremsenden Förderwagens 41 im Bremsabschnitt 7, wird durch das Anheben und Absenken der Bremsketten 2a, 2b gegen Ende des Abbremsens des Förderwagens 41 insbesondere eine sich in Bewegungsrichtung B fortbewegende, wellenartigen Bewegung des unteren Kettenabschnittes 8 durch den Bremsabschnitt ausgelöst. Die wellenartige Bewegung weist eine Hebungs- und Senkungsamplitude auf.

Die für das Anheben bzw. für die Verdrängung der Bremsketten 2a, 2b nach oben benötigte Energie wird aus der kinetischen Energie der Förderwagen bezogen. Dies führt neben den Reibungskräften im Bereich des Bremskontaktes für einen weiteren Bremseffekt.

Die Förderwagen 41 werden im Bremsabschnitt 7 soweit abgebremst bis diese die Geschwindigkeit des angetriebenen, unteren Kettenabschnittes 8 aufweisen.

Die Förderwagen 41 werden folglich mit der Geschwindigkeit der Bremsketten 2a, 2b entlang der Führungsschiene 21 aus dem Bremsabschnitt 7 heraus bewegt.

Die Förderwagen 41 können nun einer Eintakteinrichtung oder einer Bearbeitungseinrichtung (nicht gezeigt) zugeführt werden.

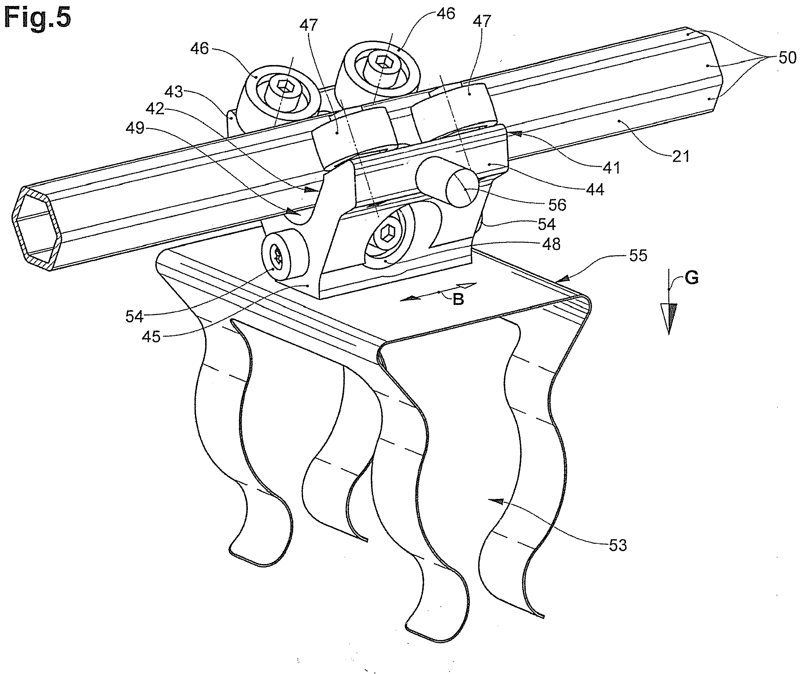

Die Figur 5 zeigt einen auf einer Führungsschiene 21 geführten Förderwagen 41 eines als Schwerkraftförderers ausgeführten Hängeförderers, wie er zum Beispiel in einer Fördervorrichtung mit einer erfindungsgemässen Bremseinrichtung 1 gemäss Figur 1 und 2 eingesetzt werden kann.

Der Förderwagen 41 ist als Aussenläufer ausgebildet. Das heisst, der Förderwagen 41 ist um die Führungsschiene 21 herum angeordnet. Der Förderwagen 41 weist einen Grundkörper 42 mit einem ersten und zweiten Wagenschenkel 43, 44 auf, welche über einen Verbindungsabschnitt 45 miteinander verbunden sind.

Am Endabschnitt des ersten Wagenschenkels 43 ist ein Paar von ersten Laufrollen 46 drehbar gelagert angeordnet. Am Endabschnitt des zweiten Wagenschenkels 44 ist ein Paar von zweiten Laufrollen 47 drehbar gelagert angeordnet. Die Laufrollen 46, 47 der genannten Laufrollenpaare sind jeweils in Bewegungsrichtung B hintereinander angeordnet. Die paarweise Anordnung von ersten und zweiten Laufrollen 46, 47 soll ein Verkippen des Förderwagens 41 in Bewegungsrichtung B verhindern.

Am Verbindungsabschnitt 45 ist eine einzelne dritte Laufrolle 48 drehbar gelagert angeordnet. Die ersten, zweiten und dritten Laufrollen sind in einem Winkel zueinander angeordnet.

Die beiden Wagenschenkel 43, 44 bilden einen Schienenaufnahmeraum 49 aus, durch welchen die Führungsschiene 21 geführt ist. Die Führungsschiene 21 ist ein symmetrisches Sechskantprofil. Die Profilaussenflächen 50 bilden die Laufflächen für die Laufrollen 46, 47, 48 aus. Die Führungsschiene 21 kann aber allgemein als Mehrkantprofil oder gar als Rundprofil ausgebildet sein.

An Stelle von zwei ersten Laufrollen 46 kann auch nur eine erste Laufrolle vorgesehen sein. An Stelle von zwei zweiten Laufrollen 47 kann auch nur eine zweite Laufrolle vorgesehen sein. An Stelle von einer dritten Laufrollen 48 können auch zwei dritte Laufrollen vorgesehen sein. Beliebige Kombinationen sind möglich. Es können ferner auch mehr als zwei erste, zweite und/oder dritte, hintereinander angeordnete Laufrollen vorgesehen sein.

Aussen am Verbindungsabschnitt 45 ist eine Halteklammer 55 zur Aufnahme und klemmenden Halterung eines Stückgutes angeordnet. An Stelle einer Halteklammer 55 kann auch ein anderes Förderorgan, wie z. B. ein Haken, angeordnet sein.

Die Halteklammer 55 ist in einer hängenden Förderung unterhalb der Führungsschiene 21 angeordnet. Die beiden Wagenschenkel 43, 44 sind von unten seitlich der Führungsschiene 21 nach oben geführt.

Die Halteklammer 55 enthält Klammerschenkel, welche einen Aufnahmeraum 53 für das Stückgut 57 einschliessen. Die Halteklammer 55 ist aus Federstahl gebildet. Durch Auseinanderspreizen der Klammerschenkel kann das Stückgut 57 in die Aufnahmeraum 53 ein- oder aus diesem herausgeführt werden. Die federelastischen Klammerschenkel halten das Stückgut 57 mittels ihrer Rückstellkraft klemmend im Aufnahmeraum 53.

Seitlich am ersten und zweiten Wagenschenkel 43, 44 ist jeweils ein quer zur Bewegungsrichtung B bzw. quer zur Längsrichtung der Führungsschiene 21 abstehender Kontaktstift 56 zur Herstellung eines Bremskontaktes mit einer der Bremsketten 2a, 2b einer Bremseinrichtung 1 gemäss Figur 1 und 2 angeordnet.

Der Förderwagen 41 enthält im Weiteren in Bewegungsrichtung B betrachtet auf seiner Vorder- und Rückseite Anschlagelemente 54, welche Stösse beim Zusammentreffen zweier unabhängig voneinander bewegten Förderwagen 41 dämpft. Die Anschlagelemente 54 sind insbesondere Zapfen aus gummielastischem Material.

## Patentansprüche

1. Bremseinrichtung (1) für eine Fördervorrichtung zum Bremsen eines sich entlang einer Bewegungsbahn bewegenden Förderwagens (41), enthaltend wenigstens ein Bremsorgan zur Herstellung eines Bremskontaktes mit dem Förderwagen (41),
**dadurch gekennzeichnet, dass**
das Bremsorgan mindestens ein Umlenkorgan (5, 6) und mindestens einen um das mindestens eine Umlenkorgan (5, 6) umlaufend geführten und als Kette aus Metall ausgebildeten, flexiblen Bremskörper (2a, 2b) mit einem bremsaktiven Kettenabschnitt (8) umfasst, welcher zur Herstellung des Bremskontaktes mit dem Förderwagen (41) in der Lage ist, durch das Eigengewicht eines Teils des Bremskörpers einen Auflagedruck bzw. eine Auflagekraft auf den Förderwagen (41) auszuüben.

2. Bremseinrichtung gemäss Anspruch 1, **dadurch gekennzeichnet, dass** die Bremseinrichtung (1) einen Bremsabschnitt (7) ausbildet, durch welchen der bremsaktive Kettenabschnitt (8) verläuft.

3. Bremseinrichtung gemäss Anspruch 1 oder 2, **dadurch gekennzeichnet, dass** die Bremseinrichtung (1) Antriebsmittel (10) zum umlaufenden Antrieb des Bremskörpers (2a, 2b) enthält.

4. Bremseinrichtung gemäss einem der Ansprüche 1 bis 3, **dadurch gekennzeichnet, dass** am Bremskörper (2a, 2b) Bremselemente (4) zur Herstellung eines reibungsbehafteten Bremskontaktes mit dem Förderwagen (41) angebracht sind.

5. Bremseinrichtung gemäss einem der Ansprüche 1 bis 4, **dadurch gekennzeichnet, dass** der Bremskörper (2a, 2b) um wenigstens zwei voneinander beabstandete Umlenkorgane (5, 6), wie Zahnräder, geführt ist.

6. Bremseinrichtung gemäss Anspruch 5, **dadurch gekennzeichnet, dass** der Bremskörper (2a, 2b) zwischen den zwei Umlenkorganen (5, 6) einen oberen Kettenabschnitt (9) und einen unteren, bremsaktiven Kettenabschnitt (8) ausbildet.

7. Bremseinrichtung gemäss einem der Ansprüche 1 bis 6, **dadurch gekennzeichnet, dass** der bremsaktive Kettenabschnitt (8) im Bremsabschnitt (7), wenn sich keine Förderwagen (41) im Bremsabschnitt (7) aufhalten, frei hängend ausgebildet ist.

8. Bremseinrichtung gemäss einem der Ansprüche 1 bis 6, **dadurch gekennzeichnet, dass** die Bremseinrichtung (1) eine Belastungseinrichtung (31) enthält, über welche auf den bremsaktiven Kettenabschnitt (8) im Bremsabschnitt (7) eine Belastungskraft ausgeübt werden kann.

9. Bremseinrichtung gemäss einem der Ansprüche 1 bis 8, **dadurch gekennzeichnet, dass** der bremsaktive Kettenabschnitt (8) im Bremsabschnitt (7) in Bewegungsrichtung (B) betrachtet seitlich von einer Führungsschiene (21) für die Förderwagen (41) verläuft.

10. Fördervorrichtung mit einer Bremseinrichtung (1) gemäss einem der Ansprüche 1 bis 9 sowie mit wenigstens einem Förderwagen (41) und mit einer Förderschiene (21), entlang welcher der wenigstens eine Förderwagen (41) durch den Bremsabschnitt (7) der Bremseinrichtung (1) bewegbar ist.

11. Fördervorrichtung gemäss Anspruch 10, **dadurch gekennzeichnet, dass** der wenigstens eine Förderwagen (41) jeweils ein Kontaktelement (56) mit einer Kontaktfläche zur Herstellung eines Bremskontaktes mit dem Bremskörper (2a, 2b) enthält.

12. Verfahren zum Bremsen eines sich entlang einer Bewegungsbahn bewegenden Förderwagens (41) mittels einer Bremseinrichtung (1) gemäss den Ansprüchen 1 bis 11,
**dadurch gekennzeichnet, dass**
der Förderwagen (41) in einem Bremsabschnitt (7) der Bremseinrichtung (1) auf den bremsaktiven Kettenabschnitt (8) wenigstens eines als Kette aus Metall ausgebildeten Bremskörpers (2a, 2b) trifft und sich unter Ausbildung eines Bremskontaktes entlang des Bremsabschnittes (7) bewegt, wobei der Bremskörper (2a, 2b) zur Herstellung des Bremskontaktes durch das Eigengewicht eines Teils des Bremskörpers einen Auflagedruck bzw. eine Auflagekraft auf den Förderwagen (41) ausübt.

13. Verfahren gemäss Anspruch 12, **dadurch gekennzeichnet, dass** der wenigstens eine Bremskörper (2a, 2b) angetrieben wird, wobei der sich in den Bremsabschnitt (7) bewegende Förderwagen (41) auf die Geschwindigkeit des bremsaktiven Kettenabschnitts (8) abgebremst wird und den Bremsabschnitt (7) mit der Geschwindigkeit des angetriebenen, bremsaktiven Kettenabschnitts (8) verlässt.

14. Verfahren gemäss Anspruch 13, **dadurch gekennzeichnet, dass** bei der Herstellung des Bremskontaktes mit dem Förderwagen (41) im Bremsabschnitt (7) der bremsaktive Kettenabschnitt (8) im Bereich des Bremskontaktes angehoben wird.

15. Verfahren gemäss Anspruch 14, **dadurch gekennzeichnet, dass** der bremsaktive Kettenabschnitt (8) durch das Anheben und Absenken eine sich in Bewegungsrichtung (B) des Förderwagen (41) fortbewegende wellenartige Bewegung ausführt.

## Claims

1. A brake device (1) for a conveying device for braking a conveying vehicle (41) moving along a movement path, comprising at least one brake member for creating a braking contact with the conveying vehicle (41),
**characterised in that**
the brake member comprises at least one deflection member (5, 6) and at least one flexible brake body (2a, 2b), said brake body (2a, 2b) being revolvingly led around the at least one deflection member (5, 6), wherein the brake body (2a, 2b) is designed as a metal chain with a braking-active chain section (8) which is able to exert a contact pressure or a contact force upon the conveying vehicle (41) by the intrinsic weight of a part of the brake body (2a, 2b) for creating the braking contact with the conveying vehicle (41).

2. A brake device according to claim 1, **characterised in that** the brake device (1) forms a braking section (7), through which the braking-active chain section (8) runs.

3. A brake device according to claim 1 or 2, **characterised in that** the brake device (1) comprises drive means (10) for the revolving drive of the brake body (2a, 2b).

4. A brake device according to one of the claim 1 to 3, **characterised in that** brake elements (4) for creating a frictional braking contact with the conveying vehicle (41) are attached on the brake body (2a, 2b).

5. A brake device according to one of the claims 1 to 4, **characterised in that** the brake body (2a, 2b) is led round at least two deflection members (5, 6) such as cogs, which are distanced to one another.

6. A brake device according to claim 5, **characterised in that** the brake body (2a, 2b) between the two deflection members (5, 6) forms an upper chain section (9) and a lower, braking-active chain section (8).

7. A brake device according to one of the claims 1 to 6, **characterised in that** the braking-active chain section (8) in the braking section (7) is designed in a freely-hanging manner if no conveying vehicles (41) are present in the braking section (7).

8. A brake device according to one of the claims 1 to 6, **characterised in that** the brake device (1) comprises a loading device (31), via which a loading force can be exerted onto the braking-active chain section (8) in the braking section (7).

9. A brake device according to one of the claims 1 to 8, **characterised in that** the braking-active chain section (8) in the braking section (7), considered in the movement direction (B) runs laterally of a guide rail (21) for the conveying vehicles (41).

10. A conveying device with a brake device (1) according to one of the claims 1 to 9 and with at least one conveying vehicle (41) and with a conveying rail (21), along which the at least one conveying vehicle (41) can be moved through the braking section (7) of the brake device (1)

11. A conveying device according to claim 10, **characterised in that** the at least one conveying vehicle (41) in each case comprises a contact element (56) with a contact surface for creating a braking contact with the brake body (2a, 2b).

12. A method for braking a conveying vehicle (41) moving along a movement path, by way of a braking device (1) according to the claims 1 to 11,
**characterised in that**
the conveying vehicle (41) in a braking section (7) of the brake device (1) hits the braking-active chain section (8) of at least one brake body (2a, 2b) which is designed as a metal chain and moves along the braking section (7) amid the formation of a braking contact, wherein brake body (2a, 2b) is able to exert a contact pressure or a contact force upon the conveying vehicle (41) by the intrinsic weight of a part of the brake body (2a, 2b) for creating the braking contact with the conveying vehicle (41).

13. A method according to claim 12, **characterised in that** the at least one brake body (2a, 2b) is driven, wherein the conveying vehicle (41) moving into the braking section (7) is braked to the speed of the braking-active chain section (8) and leaves the braking section (7) at the speed of the driven, braking-active chain section (8).

14. A method according to claim 13, **characterised in that** on creation of the braking contact with the conveying vehicle (41) in the braking section (7), the braking-active chain section (8) is lifted in the region of the braking contact.

15. A method according to claim 14, **characterised in that** the braking-active chain section (8) executes a wave-like movement propagating in the movement direction (B) of the conveying vehicle (41), by way of the lifting and lowering.

## Revendications

1. Dispositif de freinage (1) pour un dispositif de transport pour le freinage d'un chariot (41) se déplaçant le long d'une voie de déplacement, contenant au moins un organe de freinage pour l'établissement d'un contact de freinage avec le chariot (41),
**caractérisé en ce que**
l'organe de freinage comprend au moins un organe de renvoi (5, 6) et au moins un corps de freinage flexible (2a, 2b) guidé en circulation autour dudit au moins un organe de renvoi (5, 6) et réalisé en forme de chaîne en métal, avec une partie de chaîne (8) actif pour le freinage qui, pour l'établissement du contact de freinage avec le chariot (41), est en mesure d'exercer par le poids propre d'une partie du corps de freinage une pression d'application ou une force d'application sur le chariot (41).

2. Dispositif de freinage selon la revendication 1, **caractérisé en ce que** le dispositif de freinage (1) forme une section de freinage (7), à travers laquelle la partie de chaîne actif pour le freinage (8) s'étend.

3. Dispositif de freinage selon la revendication 1 ou 2, **caractérisé en ce que** le dispositif de freinage (1) comporte des moyens d'entraînement (10) pour l'entraînement en circulation du corps de freinage (2a, 2b).

4. Dispositif de freinage selon l'une quelconque des revendications 1 à 3, **caractérisé en ce que** des éléments de freinage (4) sont placés sur le corps de freinage (2a, 2b) pour l'établissement d'un contact de freinage par friction avec le chariot (41).

5. Dispositif de freinage selon l'une quelconque des revendications 1 à 4, **caractérisé en ce que** le corps de freinage (2a, 2b) est guidé autour d'au moins deux organes de renvoi (5, 6) espacés l'un de l'autre, comme des roues dentées.

6. Dispositif de freinage selon la revendication 5, **caractérisé en ce que** le corps de freinage (2a, 2b) forme entre les deux organes de renvoi (5, 6) une partie de chaîne supérieur (9) et une partie de chaîne inférieur (8) actif pour le freinage.

7. Dispositif de freinage selon l'une quelconque des revendications 1 à 6, **caractérisé en ce que** la partie de chaîne (8) actif pour le freinage est librement pendant dans la section de freinage (7), lorsqu'aucun chariot (41) n'est à l'arrêt dans la section de freinage (7).

8. Dispositif de freinage selon l'une quelconque des revendications 1 à 6, **caractérisé en ce que** le dispositif de freinage (1) comporte un dispositif de mise en charge (31), par lequel une force de mise en charge peut être exercée sur la partie de chaîne actif pour le freinage (8) dans la section de freinage (7).

9. Dispositif de freinage selon l'une quelconque des revendications 1 à 8, **caractérisé en ce que** la partie de chaine actif pour le freinage (8) s'étend dans la section de freinage (7), en considérant la direction de déplacement (B), à côté d'un rail de guidage (21) pour les chariots (41).

10. Dispositif de transport avec un dispositif de freinage (1) selon l'une quelconque des revendications 1 à 9 ainsi qu'avec au moins un chariot (41) et avec un rail de transport (21), le long duquel ledit au moins un chariot (41) est mobile à travers la section de freinage (7) du dispositif de freinage (1).

11. Dispositif de transport selon la revendication 10, **caractérisé en ce que** ledit au moins un chariot (41) comporte chaque fois un élément de contact (56) avec une face de contact pour l'établissement d'un contact de freinage avec le corps de freinage (2a, 2b).

12. Procédé de freinage d'un chariot (41) se déplaçant le long d'une voie de déplacement au moyen d'un dispositif de freinage (1) selon les revendications 1 à 11, **caractérisé en ce que** le chariot (41) arrive dans une section de freinage (7) du dispositif de freinage (1) sur la partie de chaîne actif pour le freinage (8) d'au moins un corps de freinage (2a, 2b) réalisé en forme de chaîne en métal et se déplace le long de la section de freinage (7) en formant un contact de freinage, dans lequel le corps de freinage (2a, 2b) exerce une pression d'application ou une force d'application sur le chariot (41) pour l'établissement du contact de freinage par le poids propre d'une partie du corps de freinage.

13. Procédé selon la revendication 12, **caractérisé en ce que** ledit au moins un corps de freinage (2a, 2b) est entraîné, dans lequel le chariot (41) se déplaçant dans la section de freinage (7) est freiné à la vitesse de la partie de chaîne actif pour le freinage (8) et quitte la section de freinage (7) avec la vitesse de la partie de chaîne actif pour le freinage (8) qui est entraîné.

14. Procédé selon la revendication 13, **caractérisé en ce que** lors de l'établissement du contact de freinage avec le chariot (41) dans la section de freinage (7), la partie de chaîne actif pour le freinage (8) est soulevé dans la région du contact de freinage.

15. Procédé selon la revendication 14, **caractérisé en ce que** la partie de chaîne actif pour le freinage (8) effectue, par le soulèvement et l'abaissement, un mouvement ondulé se propageant dans la direction de déplacement (B) du chariot (41).
